(19) Europäisches Patentamt
European Patent Office
Office européen des brevets

(11) **EP 4 518 417 A1**

(12) **EUROPEAN PATENT APPLICATION**
published in accordance with Art. 153(4) EPC

(43) Date of publication:
**05.03.2025 Bulletin 2025/10**

(21) Application number: **23795613.1**

(22) Date of filing: **28.04.2023**

(51) International Patent Classification (IPC):
**H04W 28/02** (2009.01) **H04W 52/00** (2009.01)

(52) Cooperative Patent Classification (CPC):
**H04W 28/02; H04W 40/10; H04W 52/00**

(86) International application number:
**PCT/CN2023/091524**

(87) International publication number:
**WO 2023/208181 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210471502**

(71) Applicant: Vivo Mobile Communication Co., Ltd.
**Dongguan, Guangdong 523863 (CN)**

(72) Inventors:
- **WANG, Yuanyuan**
  **Dongguan, Guangdong 523863 (CN)**
- **WU, Huaming**
  **Dongguan, Guangdong 523863 (CN)**
- **PENG, Shuyan**
  **Dongguan, Guangdong 523863 (CN)**
- **SI, Ye**
  **Dongguan, Guangdong 523863 (CN)**

(74) Representative: **Lavoix**
**Bayerstraße 83**
**80335 München (DE)**

(54) **POWER DETERMINATION METHOD, TERMINAL, AND READABLE STORAGE MEDIUM**

(57) This application pertains to the field of communication technologies, and discloses a power determining method, a terminal, and a readable storage medium. The power determining method in embodiments of this application includes: determining, by a first terminal, power information for target signal transmission on a first resource pool, where the target signal includes a first sidelink SL reference signal or a physical sidelink control channel PSCCH, where the first resource pool includes at least one of the following: a resource pool associated with the first SL reference signal; and a resource pool that cannot be used for transmission of data or a physical sidelink shared channel PSSCH.

A first terminal determines power information for target signal transmission on a first resource pool, where the target signal includes a first sidelink SL reference signal or a physical sidelink control channel PSCCH — 201

FIG. 2

**EP 4 518 417 A1**

## Description

### CROSS-REFERENCE TO RELATED APPLICATIONS

This application claims priority to Chinese Patent Application No. 202210471502.7, filed in China on April 28, 2022, which is incorporated herein by reference in its entirety.

### TECHNICAL FIELD

This application pertains to the field of communication technologies, and specifically relates to a power determining method, a terminal, and a readable storage medium.

### BACKGROUND

Along term evolution (Long Term Evolution, LTE) system supports sidelink (SideLink, SL) transmission, that is, data transmission is performed between terminals (User Equipment, UE) directly at a physical layer. On an LTE SL, communication is performed based on broadcast. Although the LTE SL can be used to support basic security communication of vehicle to everything (vehicle to everything, V2X), the LTE SL is not suitable for other more advanced V2X services. A new radio (New Radio, NR) system of a 5th generation mobile communication technology (5th Generation Mobile Communication Technology, 5G) supports a more advanced SL transmission design, such as unicast, multicast, or group cast, so that more comprehensive service types can be supported.

Currently, there is no solution to determining power information of an SL reference signal and power information of a physical sidelink control channel (Physical SideLink Control Channel, PSCCH) in SL transmission.

### SUMMARY

Embodiments of this application provide a power determining method, a terminal, and a readable storage medium, to resolve a problem of how to determine power information of an SL reference signal for positioning and power information of a PSCCH.

According to a first aspect, a power determining method is provided. The method includes:

determining, by a first terminal, power information for target signal transmission on a first resource pool, where the target signal includes a first sidelink SL reference signal or a physical sidelink control channel PSCCH, and the first resource pool includes at least one of the following:

a resource pool associated with the first SL reference signal; and
a resource pool that cannot be used for transmission of data or a physical sidelink shared channel (Physical SideLink Shared Channel, PSSCH).

According to a second aspect, a power determining apparatus is provided and includes:

a determining module, configured to determine power information for target signal transmission on a first resource pool, where the target signal includes a first sidelink SL reference signal or a physical sidelink control channel PSCCH, and
the first resource pool includes at least one of the following:

a resource pool associated with the first SL reference signal; and
a resource pool that cannot be used for transmission of data or a physical sidelink shared channel PSSCH.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a terminal is provided and includes a processor and a communication interface. The processor is configured to determine power information for target signal transmission on a first resource pool, where the target signal includes a first SL reference signal or a physical sidelink control channel PSCCH, and the first resource pool includes at least one of the following: a resource pool associated with the first SL reference signal; and a resource pool that cannot be used for transmission of data or a physical sidelink shared channel PSSCH.

According to a fifth aspect, a readable storage medium is provided. The readable storage medium stores a program or instructions. When the program or instructions are executed by a processor, the steps of the method according to the first aspect are implemented.

According to a sixth aspect, a chip is provided. The chip includes a processor and a communication interface. The communication interface is coupled to the processor. The processor is configured to run a program or instructions to implement the steps of the method according to the first aspect.

According to a seventh aspect, a computer program or program product is provided. The computer program or program product is stored in a storage medium. The computer program or program product is executed by at least one processor to implement the steps of the method according to the first aspect.

In the embodiments of this application, the first terminal determines the power information for target signal transmission on the first resource pool, where the target signal includes the first SL reference signal or the physical sidelink control channel PSCCH, and the first SL reference signal is the reference signal for positioning, where the first resource pool includes at least one of the following: the resource pool associated with the first SL reference signal; and the resource pool not available for the data transmission or the physical sidelink shared channel PSSCH. In this way, the power information of the sent first SL reference signal and power information of the PSCCH can be determined, and further, reliability of SL transmission can be ensured.

## BRIEF DESCRIPTION OF DRAWINGS

FIG. 1 is a block diagram of a wireless communication system to which an embodiment of this application may be applied;
FIG. 2 is a flowchart of a power determining method according to an embodiment of this application;
FIG. 3 is a schematic diagram of a format of an SL reference signal according to an embodiment of this application;
FIG. 4 is a structural diagram of a power determining apparatus according to an embodiment of this application;
FIG. 5 is a structural diagram of a communication device according to an embodiment of this application; and
FIG. 6 is a structural diagram of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

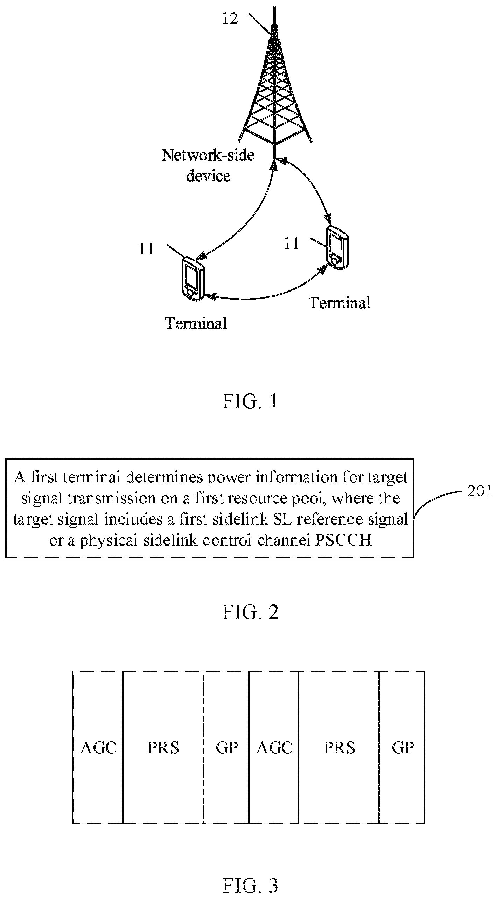

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. A power determining method provided in the embodiments of this application is hereinafter described in detail by using some embodiments and application scenarios thereof with reference to the accompanying drawings.

As shown in FIG. 2, an embodiment of this application provides a power determining method. The method includes the following step.

Step 201: A first terminal determines power information for target signal transmission on a first resource pool, where the target signal includes a first sidelink (SideLink, SL) reference signal or a physical sidelink control channel (Physical SideLink Control Channel, PSCCH).

The first SL reference signal may be understood as a reference signal for positioning, where the reference signal may include an SL positioning reference signal (Positioning Reference Signal, PRS), and a signal extended from the SL PRS and used for positioning, for example, a sidelink synchronization signal block (SideLink Synchronization Signal Block, S-SSB), an SL channel state information reference signal (Channel state information Reference Signal, CSI-RS), an SL phase-tracking reference signal (Phase-tracking Reference Signal, PTRS), an SL demodulation reference signal (Demodulation Reference Signal, DMRS), or the like.

The PSCCH is used to send a signal associated with an SL reference signal. For example, sidelink control information (Sidelink Control Information, SCI) sent before the SL reference signal is sent, is sent on the PSCCH.

The power information includes at least one of target power, power headroom (Power Headroom, PH), a power adjustment value, and a power adjustment mode. For example, the power adjustment mode is: based on received power, a receiving terminal schedules a sending terminal to adjust power; or a sending terminal adjusts transmit power based on received power fed back by a receiving terminal.

Further, the power adjustment mode further includes performing a power adjustment based on power of a resource element (Resource Element, RE) on a comb (comb) structure.

Further, the first terminal may send the PH to at least one of a receiving terminal, a network-side device, or a scheduling terminal.

The first resource pool includes at least one of the following:

(1) a resource pool associated with the first SL reference signal, where
the resource pool associated with the first SL reference signal includes at least one of the following:

(11) a resource pool that can be used for transmission of the first SL reference signal;
(12) a dedicated resource pool for the first SL reference signal as indicated by first indication information; and
(13) a resource pool in which the first SL reference signal has a highest priority, that is, the priority of the first SL reference signal in the resource pool is the highest; and

(2) a resource pool that cannot be used for transmission of data or a physical sidelink shared channel (Physical SideLink Shared Channel, PSSCH).

In the foregoing description, the first resource pool may be a resource pool shared by a plurality of terminals.

In this embodiment, the first terminal determines the power information for target signal transmission on the first resource pool, where the target signal includes the first SL reference signal or the PSCCH, and the first resource pool includes at least one of the following: the resource pool associated with the first SL reference signal; and the resource pool not available for data transmission or the PSCCH. In this way, the power information of the sent first SL reference signal and power information of the PSCCH can be determined, and further, reliability of SL transmission can be ensured.

In some embodiments of this application, target power of the PSCCH is determined based on target power of the first SL reference signal. Further, the target power of the PSCCH is the target power of the first SL reference signal.

Further, the target power of the PSCCH is determined based on the target power of the first SL reference signal, the number of resource blocks (Resource Block, RB) of the first SL reference signal, and the number of RBs of the PSCCH.

In an embodiment, target power $P_{PSCCH}(i)$ of the PSCCH in an $i^{th}$ time domain occasion is:

$$P_{PSCCH}(i) = 10\,log_{10}\left(\frac{M_{RB}^{PSCCH}(i)}{M_{RB}^{SL\text{-}PRS}(i)}\right) + P_{sl\text{-}prs}(i),$$

where $P_{sl\text{-}prs}(i)$ is target power of the first SL reference signal in the $i^{th}$ time domain occasion;

$M_{RB}^{SL\text{-}PRS}(i)$ is the number of RBs of the first SL reference signal in the $i^{th}$ time domain occasion; and

$M_{RB}^{PSCCH}(i)$ is the number of RBs of the PSCCH in the $i^{th}$ time domain occasion.

In some embodiments of this application, the target power of the first SL reference signal is determined based on at least one of the following:

(1) configuration information of the first SL reference signal, where
the configuration information includes at least one of the following:

(11) a target parameter, where the target parameter is for adjusting a power coefficient of the transmit power of the first SL reference signal;
(12) $P_{CMAX}$, where $P_{CMAX}$ is predefined maximum transmit power; and
(13) $P_{MAX,CBR}$, where $P_{MAX,CBR}$ is maximum transmit power under a channel busy ratio (Channel Busy Ratio, CBR), and optionally, if the first resource pool is the resource pool associated with the first SL reference signal, the CBR includes one of the following:

a ratio of subchannels on which a received signal strength indicator (Received Signal Strength Indicator, RSSI) of the first SL reference signal measured in the first resource pool exceeds a first threshold;
a ratio of resources of the first SL reference signal whose RSSI exceeds a second threshold over the first SL reference signal measured in the first resource pool;
a ratio of time domain of the first SL reference signal on which the RSSI of the first SL reference signal measured in the first resource pool exceeds a third threshold;
a ratio of REs on which the RSSI of the first SL reference signal measured in the first resource pool exceeds a fourth threshold;
a ratio of combs on which the RSSI of the first SL reference signal measured in the first resource pool exceeds a fifth threshold; and
a ratio of subchannels on which an RSSI of a DMRS corresponding to the PSCCH measured in the first resource pool exceeds a sixth threshold;

(2) first transmit power of the first SL reference signal, calculated based on an SL path loss reference signal; and
(3) second transmit power of the first SL reference signal, calculated based on a downlink path loss reference signal.

For example, in a first implementation, the target power of the first SL reference signal is:

$$min\big(P_{CMAX}, P_{MAX,CBR}, P_{sl\text{-}prs,SL}(i)\big)\;[dBm];$$

in a second implementation, the target power of the first SL reference signal is:

$$min\big(P_{CMAX}, P_{sl\text{-}prs,SL}(i)\big)\;[dBm];$$

in a third implementation, the target power of the first SL reference signal is:

$$\min\left(P_{CMAX}, P_{MAX,CBR}, P_{sl\text{-}prs,DL}(i)\right) \ [dBm];$$

in a fourth implementation, the target power of the first SL reference signal is:

$$\min\left(P_{CMAX}, P_{sl\text{-}prs,DL}(i)\right) \ [dBm],$$

where $P_{sl\text{-}prs,DL}(i)$ is the second transmit power of the first SL reference signal, calculated based on the downlink path loss reference signal, and $P_{sl\text{-}prs,DL}(i)$ is calculated according to the following expression:

$$P_{O,D} + 10\log_{10}\left(2^{\mu} \cdot M_{RB}^{SL\text{-}PRS}(i)\right) + \alpha_D \cdot PL_D,$$

where $P_{O,D}$ and $\alpha_D$ are adjustment factors calculated based on the downlink path loss reference signal, and the adjustment factors are used to adjust the transmit power of the first SL reference signal;

$M_{RB}^{SL-PRS}(i)$ is the number of RBs of the first SL reference signal in the $i^{th}$ time domain occasion; and

$PL_D = PL_{b,f,c}(q_d)$ is a path loss calculated based on a downlink path loss reference signal $q_d$, where the downlink path loss reference signal includes at least one of the following:

a synchronization signal (Synchronization Signal, SS) corresponding to a master information block (Master Information Block, MIB);

a physical broadcast channel (Physical broadcast channel, PBCH) block corresponding to the MIB; and

a reference signal (Reference Signal, RS) used to determine transmit power of a physical uplink shared channel (Physical Uplink Shared Channel, PUSCH) scheduled by downlink control information (Downlink Control Information, DCI) format (format) 0_0; and

in a fifth implementation, the target power of the first SL reference signal is:

$$\min\left(P_{CMAX}, P_{MAX,CBR}, \min\left(P_{sl\text{-}prs,DL}(i), P_{sl\text{-}prs,SL}(i)\right)\right) \ [dBm],$$

where $P_{sl\text{-}prs,SL}(i)$ is the first transmit power of the first SL reference signal, calculated based on the SL path loss reference signal, and is calculated according to the following expression:

$$P_{0,sl\text{-}prs} + 10\log_{10}\left(2^{\mu} \cdot M_{RB}^{SL-PRS}\right) + \alpha_{sl\text{-}prs} \cdot PL,$$

where $P_{0,sl\text{-}prs}$ and $\alpha_{sl\text{-}prs}$ are power adjustment parameters of the SL positioning reference signal;

$M_{RB}^{SL-PRS}(i)$ is the number of RBs of the first SL reference signal in the $i^{th}$ time domain occasion; and PL is a path loss of the SL path loss reference signal.

In some embodiments of this application, the first transmit power is determined based on a first parameter, the number of RBs of the first SL reference signal, and a path loss of the SL path loss reference signal, where the first parameter is used to adjust a power coefficient of the transmit power of the first SL reference signal.

Optionally, the path loss of the SL path loss reference signal is determined based on one of the following:

transmit power of the SL path loss reference signal; and

reference signal received power (Reference Signal Received Power, RSRP) of the SL path loss reference signal, where

the RSRP includes L1 RSRP, or the RSRP includes first RSRP, where the first RSRP is determined based on a higher layer filter coefficient and the L1 RSRP.

For example, PL may be obtained in the following calculation manner:

Solution 1:

$$PL = A - B;$$

A: transmit power of the SL path loss reference signal; and
B: RSRP of the received SL path loss reference signal calculated based on a higher layer filter coefficient and physical layer received power.

Solution 2:

$$PL = A - C;$$

A: transmit power of the SL path loss reference signal; and
C: received L1 RSRP of the received SL path loss reference signal.

The PL in solution 1 and solution 2 is determined by the first terminal, and values of B and C are sent to the first terminal by a terminal receiving the SL path loss reference signal.

Solution 3:

$$PL = P0 - B;$$

$$PL = P0 - C;$$

P0: transmit power of the SL path loss reference signal.
The PL in solution 3 is determined by the terminal receiving the SL path loss reference signal, and a value of P0 needs to be sent by the first terminal to the terminal receiving the SL path loss reference signal.
Optionally, the SL path loss reference signal in the foregoing description includes at least one of the following:

a DMRS corresponding to the PSSCH;
a DMRS corresponding to the PSCCH; and
a second SL reference signal, where the second SL reference signal is a reference signal for positioning, and in a case that the SL path loss reference signal is the second SL reference signal, RSRP of the second SL reference signal is a sum of power on REs transmitting the second SL reference signal.

In some embodiments of this application, the second transmit power is determined based on a second parameter, the number of RBs of the first SL reference signal, and a path loss of the downlink path loss reference signal, where the second parameter is used to adjust a power coefficient of the transmit power of the first SL reference signal.
In some embodiments of this application, that a first terminal determines power information for target signal transmission on a first resource pool includes:

the first terminal determines the number N of first SL reference signals sent in the first resource pool in a first time domain occasion, where N is a positive integer; and
the first terminal determines target power of each first SL reference signal sent in the first time domain occasion.

Specifically, the target power of each first SL reference signal may be determined in the foregoing manner. After determining the target power of the N first SL reference signals, the first terminal may send each first SL reference signal based on the target power, or may send target power of the N reference signals to other terminals, and the other terminals send each first SL reference signal. In other words, after the first terminal determines the target power of each first SL reference signal sent in the first time domain occasion, the method further includes:

> the first terminal sends the N first SL reference signals to the other terminals;
> or
> the first terminal receives the N first SL reference signals sent by the other terminals. If the other terminals include a plurality of terminals, the first terminal expects the received power of the received N first SL reference signals to be consistent as much as possible, or expects the received power of the N first SL reference signals to be within a threshold range. For this reason, transmit power of each of the other terminals may be different. For example, based on the different received power of the N first SL reference signals received by the first terminal, the transmit power of the N different first SL reference signals is determined. Further, in a case that the N first SL reference signals are sent to the first terminal by the other terminals, received power of the N first SL reference signals received by the first terminal is within a preset threshold range.

In the foregoing description, each first SL reference signal may be sent based on corresponding target power. The other terminals may be one or more terminals. This is not limited herein. Optionally, a maximum value of the number N of the first SL reference signals sent in a time domain occasion may be specified in a protocol, indicated by the network-side device, or specified by a higher layer. A time domain occasion of each first SL reference signal includes an automatic gain control (Automatic Gain Control, AGC) symbol and a gap (Gap, GP) symbol. The automatic gain control (Automatic Gain Control, AGC) symbol may be a repetition of a first symbol of the SL-PRS or an extension of the SL-PRS symbol. The gap symbol may be a measurement gap or a gap symbol for transceiving switching. Optionally, no SL reference signal can be mapped on the symbol. For example, different terminals correspond to different time domain occasions, and each time domain occasion has AGC and/or GP symbols; or different SL-PRSs correspond to different time domain occasions, and each time domain occasion has AGC and/or GP symbols. As shown in FIG. 3, each time domain occasion has an AGC symbol and a GP symbol.

In some embodiments of this application, that the first terminal determines target power of each first SL reference signal sent in the first time domain occasion includes:
the first terminal determines target power of the N first SL reference signals sent to M terminals in the first time domain occasion, where target power of each first SL reference signal is determined based on a path loss of a downlink path loss reference signal, and the path loss of the downlink path loss reference signal is determined based on at least one of the following:

> an average value of RSRP received by the M terminals, where M is a positive integer; and
> a smallest value of RSRP in RSRP received by the M terminals.

In an embodiment, locations of different terminals among the M terminals are different, and RSRP received by the M terminals may be different. When determining the target power of the N first SL reference signals, the first terminal may determine the path loss of the downlink path loss reference signal in the foregoing manner.

Locations of different terminals among N1 terminals are different, and RSRP received by the N1 terminals may be different. If in-band emission is avoided by consistent transmit power, the M terminals are in an area (for example, with a same zone ID or within an Xm communication range), or RSRP of the M terminals is within a range.

In some embodiments of this application, after the first terminal determines the target power of the N first SL reference signals sent to the M terminals in the first time domain occasion, the method further includes:
in a case that a sum of target power of the N first SL reference signals is greater than maximum transmit power of the first terminal, the first terminal performs one of the following:

> (1) sending N1 first SL reference signals to the M terminals, where the N1 first SL reference signals are signals among the N first SL reference signals, and N1 is a positive integer less than N, that is, in the case that the sum of the target power of the N first SL reference signals is greater than the maximum transmit power of the first terminal, selecting the N1 first SL reference signals for sending;
> (2) sending the N1 first SL reference signals to M1 terminals, where the M1 terminals are terminals among the M terminals, and M1 is a positive integer less than M, that is, in the case that the sum of the target power of the N first SL reference signals is greater than the maximum transmit power of the first terminal, selecting the M1 terminals from the M terminals, and selecting the N1 first SL reference signals from the N first SL reference signals for sending; and
> (3) sending the N first SL reference signals to the M terminals, where transmit power of a 1st first SL reference signal among the N first SL reference signals is less than target power of the 1st first SL reference signals, and the 1st first SL reference signal is one or more signals among the N first SL reference signals, that is, reducing target power of part of the N first SL reference signals.

In this way, how to determine transmit power of a plurality of first SL reference signals in a time domain occasion can be determined, so that reliability of SL transmission is improved.

In the foregoing description, the maximum transmit power of the first terminal may be $P_{CMAX}$ or $P_{MAX,CBR}$.

In some embodiments of this application, the M1 terminals are determined based on at least one of the following:

(1) RSRP of a second terminal, where the second terminal is any one of the M terminals, for example, the second terminal is a terminal whose received RSRP is greater than a first preset threshold;
(2) a priority of the second terminal, where for example, the second terminal is a terminal whose priority is higher than a second preset threshold; and
(3) a distance between the second terminal and the first terminal, where for example, a terminal whose distance away from the first terminal is less than or equal to a third preset threshold is selected.

In the foregoing description, the M1 terminals may include one or more second terminals.

In some embodiments of this application, the N1 first SL reference signals are determined based on a priority of a third SL reference signal, and the third SL reference signal is any one of the N first SL reference signals. For example, the third SL reference signal is a reference signal whose priority is higher than a fourth preset threshold, and the N1 first SL reference signals may include one or more third SL reference signals.

In some embodiments of this application, that a first terminal determines power information for target signal transmission on a first resource pool includes:

the first terminal determines PH of the first SL reference signal sent in the first resource pool in a second time domain occasion; and
the first terminal sends the PH of the first SL reference signal to a target device, where the target device includes at least one of a terminal and a network-side device.

The power determining method provided in this embodiment of this application may be performed by a power determining apparatus. A power determining apparatus provided in an embodiment of this application is described by assuming that the power determining method is performed by the power determining apparatus in this embodiment of this application.

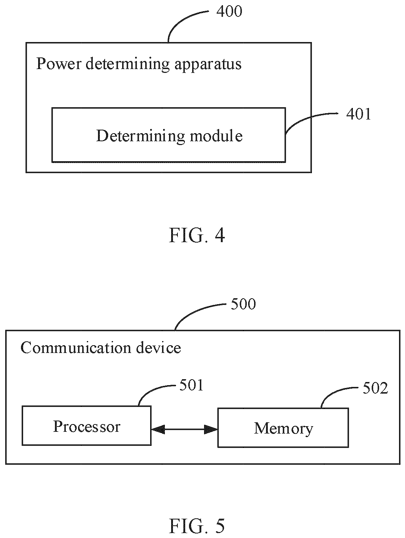

As shown in FIG. 4, an embodiment of this application provides a power determining apparatus. The power determining apparatus 400 includes:

a determining module 401, configured to determine power information for target signal transmission on a first resource pool, where the target signal includes a first sidelink SL reference signal or a physical sidelink control channel PSCCH, and
the first resource pool includes at least one of the following:

a resource pool associated with the first SL reference signal; and
a resource pool that cannot be used for transmission of data or a physical sidelink shared channel PSSCH.

Optionally, the resource pool associated with the first SL reference signal includes at least one of the following:

a resource pool that can be used for transmission of the first SL reference signal;
a dedicated resource pool for the first SL reference signal as indicated by first indication information; and
a resource pool in which the first SL reference signal has a highest priority.

Optionally, the power information includes at least one of target power, power headroom PH, a power adjustment value, and a power adjustment mode.

Optionally, target power of the PSCCH is determined based on target power of the first SL reference signal.

Optionally, target power $P_{PSCCH}(i)$ of the PSCCH in an $i^{th}$ time domain occasion is:

$$P_{PSCCH}(i) = 10\,log_{10}\left(\frac{M_{RB}^{PSCCH}(i)}{M_{RB}^{SL\text{-}PRS}(i)}\right) + P_{sl\text{-}prs}(i),$$

where $P_{sl\text{-}prs}(i)$ is target power of the first SL reference signal in the $i^{th}$ time domain occasion;

$M_{RB}^{SL\text{-}PRS}(i)$ is the number of RBs of the first SL reference signal in the $i^{th}$ time domain occasion; and

$M_{\mathrm{RB}}^{\mathrm{PSCCH}}(i)$ is the number of RBs of the PSCCH in the $i^{\mathrm{th}}$ time domain occasion.

Optionally, the target power of the first SL reference signal is determined based on at least one of the following:

configuration information of the first SL reference signal;
first transmit power of the first SL reference signal, calculated based on an SL path loss reference signal; and
second transmit power of the first SL reference signal, calculated based on a downlink path loss reference signal.

Optionally, the configuration information includes at least one of the following:

a target parameter, where the target parameter is for adjusting a power coefficient of the transmit power of the first SL reference signal;
$P_{\mathrm{CMAX}}$, where $P_{\mathrm{CMAX}}$ is predefined maximum transmit power; and
$P_{\mathrm{MAX,CBR}}$, where $P_{\mathrm{MAX,CBR}}$ is maximum transmit power under a channel busy ratio CBR.

Optionally, if the first resource pool is the resource pool associated with the first SL reference signal, the CBR includes one of the following:

a ratio of subchannels on which an RSSI of the first SL reference signal measured in the first resource pool exceeds a first threshold;
a ratio of resources of the first SL reference signal whose RSSI exceeds a second threshold over the first SL reference signal measured in the first resource pool;
a ratio of time domain of the first SL reference signal on which the RSSI of the first SL reference signal measured in the first resource pool exceeds a third threshold;
a ratio of REs on which the RSSI of the first SL reference signal measured in the first resource pool exceeds a fourth threshold;
a ratio of combs on which the RSSI of the first SL reference signal measured in the first resource pool exceeds a fifth threshold; and
a ratio of subchannels on which an RSSI of a demodulation reference signal DMRS corresponding to the PSCCH measured in the first resource pool exceeds a sixth threshold.

Optionally, the first transmit power is determined based on a first parameter, the number of RBs of the first SL reference signal, and a path loss of the SL path loss reference signal, where
the first parameter is used to adjust a power coefficient of the transmit power of the first SL reference signal.

Optionally, the path loss of the SL path loss reference signal is determined based on one of the following:

transmit power of the SL path loss reference signal; and
reference signal received power RSRP of the SL path loss reference signal, where
the RSRP includes L1 RSRP, or the RSRP includes first RSRP, where the first RSRP is determined based on a higher layer filter coefficient and the L1 RSRP.

Optionally, the SL path loss reference signal includes at least one of the following:

a demodulation reference signal DMRS corresponding to the PSSCH;
a DMRS corresponding to the PSCCH; and
a second SL reference signal, where the second SL reference signal is a reference signal for positioning.

Optionally, in a case that the SL path loss reference signal includes the second SL reference signal, RSRP of the second SL reference signal is a sum of power on REs transmitting the second SL reference signal.

Optionally, the second transmit power is determined based on a second parameter, the number of RBs of the first SL reference signal, and a path loss of the downlink path loss reference signal, where
the second parameter is used to adjust a power coefficient of the transmit power of the first SL reference signal.

Optionally, the determining module 401 includes:

a first determining submodule, configured to determine the number N of first SL reference signals sent in the first resource pool in a first time domain occasion, where N is a positive integer; and
a second determining submodule, configured to determine target power of each first SL reference signal sent in the first time domain occasion.

Optionally, the apparatus 400 further includes a transceiver module, configured to:

send the N first SL reference signals to other terminals;
or
receive the N first SL reference signals sent by other terminals.

Optionally, that the first terminal determines target power of each first SL reference signal sent in the first time domain occasion includes:
the first terminal determines target power of the N first SL reference signals sent to M terminals in the first time domain occasion, where target power of each first SL reference signal is determined based on a path loss of a downlink path loss reference signal, and the path loss of the downlink path loss reference signal is determined based on at least one of the following:

an average value of RSRP received by the M terminals, where M is a positive integer; and
a smallest value of RSRP in RSRP received by the M terminals.

Optionally, the apparatus 400 further includes an execution module, configured to:
in a case that a sum of target power of the N first SL reference signals is greater than maximum transmit power of the first terminal, perform one of the following:

sending N1 first SL reference signals to the M terminals, where the N1 first SL reference signals are signals among the N first SL reference signals, and N1 is a positive integer less than N;
sending the N1 first SL reference signals to M1 terminals, where the M1 terminals are terminals among the M terminals, and M1 is a positive integer less than M; and
sending the N first SL reference signals to the M terminals, where transmit power of a $1^{st}$ first SL reference signal among the N first SL reference signals is less than target power of the $1^{st}$ first SL reference signals, and the $1^{st}$ first SL reference signal is a signal among the N first SL reference signals.

Optionally, the M1 terminals are determined based on at least one of the following:

RSRP of a second terminal, where the second terminal is any one of the M terminals;
a priority of the second terminal; and
a distance between the second terminal and the first terminal.

Optionally, the N1 first SL reference signals are determined based on a priority of a third SL reference signal, and the third SL reference signal is any one of the N first SL reference signals.
Optionally, a time domain occasion of each first SL reference signal includes an automatic gain control AGC symbol and a gap symbol.
Optionally, in a case that the N first SL reference signals are sent to the first terminal by the other terminals, received power of the N first SL reference signals received by the first terminal is within a preset threshold range.
Optionally, the determining module 401 includes:

a third determining submodule, configured to determine, by the first terminal, PH of the first SL reference signal sent in the first resource pool in a second time domain occasion; and
a sending submodule, configured to send the PH of the first SL reference signal to a target device, where the target device includes at least one of a terminal and a network-side device.

The power determining apparatus 400 provided in this embodiment of this application can implement each process implemented by the method embodiment in FIG. 2, with the same technical effect achieved. To avoid repetition, details are not described herein again.
The power determining apparatus 400 in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

Optionally, as shown in FIG. 5, an embodiment of this application further provides a communication device 500, including a processor 501 and a memory 502, where the memory 502 stores a program or instructions capable of running on the processor 501. For example, when the communication device 500 is a terminal, and the program or instructions are executed by the processor 501, the steps of the foregoing embodiment of the power determining method in FIG. 2 are implemented, with the same technical effect achieved. To avoid repetition, details are not described herein again.

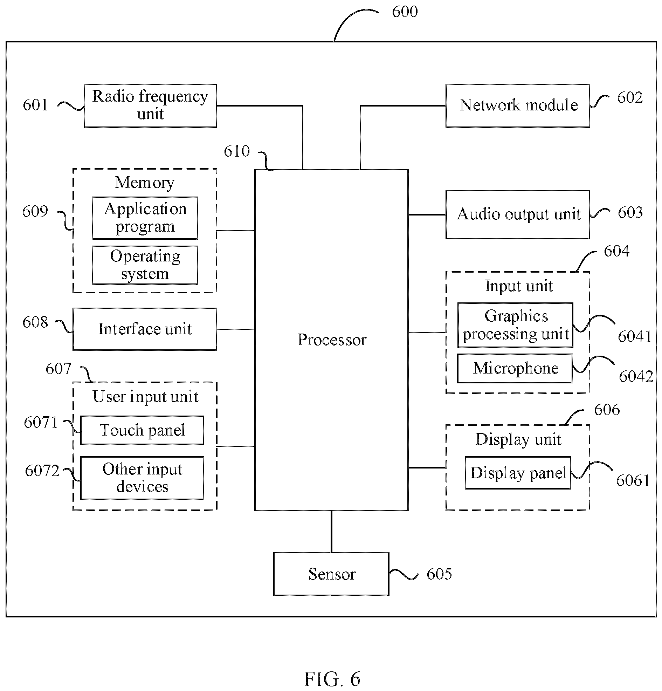

An embodiment of this application further provides a terminal, including a processor and a communication interface. The processor is configured to determine power information for target signal transmission on a first resource pool, where the target signal includes a first sidelink SL reference signal or a physical sidelink control channel PSCCH, and the first SL reference signal is a reference signal for positioning, where the first resource pool includes at least one of the following: a resource pool associated with the first SL reference signal; and a resource pool that cannot be used for transmission of data or a physical sidelink shared channel PSSCH. The terminal embodiment corresponds to the foregoing terminal-side method embodiment, and each implementation process and implementation of the foregoing method embodiment can be applied to the terminal embodiment, with the same technical effect achieved. Specifically, FIG. 6 is a schematic diagram of a hardware structure of a terminal for implementing an embodiment of this application.

The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to all components. Optionally, the power supply may be logically connected to the processor 610 through a power management system. In this way, functions such as charge management, discharge management, and power consumption management are implemented by using the power management system. The terminal structure shown in FIG. 6 does not constitute a limitation on the terminal. The terminal may include more or fewer components than those shown in the figure, or some components are combined, or component arrangements are different. Details are not described herein again.

It should be understood that, in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 601 may transmit the downlink data to the processor 610 for processing. In addition, the radio frequency unit 601 may send uplink data to the network-side device. Usually, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may primarily include a first storage area for storing programs or instructions and a second storage area for storing data. The first storage area may store an operating system, an application program or instructions required by at least one function (such as an audio play function and an image play function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 610.

The processor 610 is configured to determine power information for target signal transmission on a first resource pool, where the target signal includes a first sidelink SL reference signal or a physical sidelink control channel PSCCH, and the first resource pool includes at least one of the following:

> a resource pool associated with the first SL reference signal; and
> a resource pool that cannot be used for transmission of data or a physical sidelink shared channel PSSCH.

The terminal 600 can implement the steps implemented by the terminal in the embodiment shown in FIG. 2. For details, refer to the description in the embodiment shown in FIG. 2. Details are not described herein again.

An embodiment of this application further provides a readable storage medium. The readable storage medium stores a program or instructions. When the program or instructions are executed by a processor, each process of the foregoing embodiment of the power determining method shown in FIG. 2 is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the power determining method shown in FIG. 2, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the power determining method, with the same technical effect achieved. To avoid repetition, details are not described herein again.

An embodiment of this application further provides a communication system, including a first terminal. The first terminal may be configured to perform the steps of the power determining method in the embodiment shown in FIG. 2.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of the present disclosure.

A person skilled in the art may clearly understand that, for the purpose of convenient and brief description, for a detailed working process of the foregoing system, apparatus, and unit, refer to a corresponding process in the foregoing method embodiments, and details are not described herein again.

In the embodiments provided in this application, it should be understood that the disclosed apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure substantially or parts contributing to the related art or parts of the technical solutions may be embodied in a form of a software product, and the computer software product is stored in a storage medium, including several instructions for enabling a computer device (which may be a personal computer, a server, a network device, or the like) to perform all or a part of the steps of the method in each embodiment of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or a part of the procedures of the foregoing method embodiments may be implemented by related hardware controlled by a computer program. The program may be stored in a computer-readable storage medium. When the program is executed, the procedures of the foregoing method embodiments may be performed. The storage medium may include a magnetic disk, an optical disc, a read-only memory (Read-Only Memory, ROM), a random access memory (Random Access Memory, RAM), or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A power determining method, comprising:

   determining, by a first terminal, power information for target signal transmission on a first resource pool, wherein the target signal comprises a first sidelink SL reference signal or a physical sidelink control channel PSCCH, and the first SL reference signal is a reference signal for positioning, wherein
   the first resource pool comprises at least one of the following:

   a resource pool associated with the first SL reference signal; and
   a resource pool that cannot be used for transmission of data or a physical sidelink shared channel PSSCH.

2. The method according to claim 1, wherein the resource pool associated with the first SL reference signal comprises at least one of the following:

   a resource pool that can be used for transmission of the first SL reference signal;
   a dedicated resource pool for the first SL reference signal as indicated by first indication information; and
   a resource pool in which the first SL reference signal has a highest priority.

3. The method according to claim 1, wherein the power information comprises at least one of target power, power headroom PH, a power adjustment value, and a power adjustment mode.

4. The method according to claim 3, wherein target power of the PSCCH is determined based on target power of the first SL reference signal.

5. The method according to claim 4, wherein target power $P_{PSCCH}(i)$ of the PSCCH in an $i^{th}$ time domain occasion is:

$$P_{\text{PSCCH}}(i) = 10 \, log_{10} \left( \frac{M_{\text{RB}}^{\text{PSCCH}}(i)}{M_{\text{RB}}^{\text{SL-PRS}}(i)} \right) + P_{\text{sl-prs}}(i),$$

wherein $P_{\text{sl-prs}}(i)$ is target power of the first SL reference signal in the $i^{\text{th}}$ time domain occasion;

$M_{\text{RB}}^{\text{SL-PRS}}(i)$ is the number of resource blocks RBs of the first SL reference signal in the $i^{\text{th}}$ time domain occasion; and

$M_{\text{RB}}^{\text{PSCCH}}(i)$ is the number of RBs of the PSCCH in the $i^{\text{th}}$ time domain occasion.

6. The method according to claim 3 or 5, wherein the target power of the first SL reference signal is determined based on at least one of the following:

   configuration information of the first SL reference signal;
   first transmit power of the first SL reference signal, calculated based on an SL path loss reference signal; and
   second transmit power of the first SL reference signal, calculated based on a downlink path loss reference signal.

7. The method according to claim 6, wherein the configuration information comprises at least one of the following:

   a target parameter, wherein the target parameter is for adjusting a power coefficient of the transmit power of the first SL reference signal;
   $P_{\text{CMAX}}$, wherein $P_{\text{CMAX}}$ is predefined maximum transmit power; and
   $P_{\text{MAX,CBR}}$, wherein $P_{\text{MAX,CBR}}$ is maximum transmit power under a channel busy ratio CBR.

8. The method according to claim 7, wherein if the first resource pool is the resource pool associated with the first SL reference signal, the CBR comprises one of the following:

   a ratio of subchannels on which a received signal strength indicator RSSI of the first SL reference signal measured in the first resource pool exceeds a first threshold;
   a ratio of resources of the first SL reference signal whose RSSI exceeds a second threshold over the first SL reference signal measured in the first resource pool;
   a ratio of time domain of the first SL reference signal on which the RSSI of the first SL reference signal measured in the first resource pool exceeds a third threshold;
   a ratio of resource elements REs on which the RSSI of the first SL reference signal measured in the first resource pool exceeds a fourth threshold;
   a ratio of combs on which the RSSI of the first SL reference signal measured in the first resource pool exceeds a fifth threshold; and
   a ratio of subchannels on which an RSSI of a demodulation reference signal DMRS corresponding to the PSCCH measured in the first resource pool exceeds a sixth threshold.

9. The method according to claim 6, wherein the first transmit power is determined based on a first parameter, the number of RBs of the first SL reference signal, and a path loss of the SL path loss reference signal, wherein the first parameter is used to adjust a power coefficient of the transmit power of the first SL reference signal.

10. The method according to claim 9, wherein the path loss of the SL path loss reference signal is determined based on one of the following:

    transmit power of the SL path loss reference signal; and
    reference signal received power RSRP of the SL path loss reference signal, wherein
    the RSRP comprises layer L1 RSRP, or the RSRP comprises first RSRP, wherein the first RSRP is determined based on a higher layer filter coefficient and the L1 RSRP.

11. The method according to claim 10, wherein the SL path loss reference signal comprises at least one of the following:

    a demodulation reference signal DMRS corresponding to the PSSCH;
    a DMRS corresponding to the PSCCH; and
    a second SL reference signal, wherein the second SL reference signal is a reference signal for positioning.

12. The method according to claim 11, wherein in a case that the SL path loss reference signal comprises the second SL reference signal, RSRP of the second SL reference signal is a sum of power on REs transmitting the second SL reference signal.

13. The method according to claim 6, wherein the second transmit power is determined based on a second parameter, the number of RBs of the first SL reference signal, and a path loss of the downlink path loss reference signal, wherein the second parameter is used to adjust a power coefficient of the transmit power of the first SL reference signal.

14. The method according to claim 3, wherein the determining, by a first terminal, power information for target signal transmission on a first resource pool comprises:

determining, by the first terminal, the number N of first SL reference signals sent in the first resource pool in a first time domain occasion, wherein N is a positive integer; and
determining, by the first terminal, target power of each first SL reference signal sent in the first time domain occasion.

15. The method according to claim 14, wherein after the determining, by the first terminal, target power of each first SL reference signal sent in the first time domain occasion, the method further comprises:

sending, by the first terminal, the N first SL reference signals to other terminals;
or
receiving, by the first terminal, the N first SL reference signals sent by other terminals.

16. The method according to claim 14, wherein the determining, by the first terminal, target power of each first SL reference signal sent in the first time domain occasion comprises:
determining, by the first terminal, target power of the N first SL reference signals sent to M terminals in the first time domain occasion, wherein target power of each first SL reference signal is determined based on a path loss of a downlink path loss reference signal, and the path loss of the downlink path loss reference signal is determined based on at least one of the following:

an average value of RSRP received by the M terminals, wherein M is a positive integer; and
a smallest value of RSRP in RSRP received by the M terminals.

17. The method according to claim 14, wherein after the determining, by the first terminal, target power of the N first SL reference signals sent to M terminals in the first time domain occasion, the method further comprises:
in a case that a sum of target power of the N first SL reference signals is greater than maximum transmit power of the first terminal, performing, by the first terminal, one of the following:

sending N1 first SL reference signals to the M terminals, wherein the N1 first SL reference signals are signals among the N first SL reference signals, and N1 is a positive integer less than N;
sending the N1 first SL reference signals to M1 terminals, wherein the M1 terminals are terminals among the M terminals, and M1 is a positive integer less than M; and
sending the N first SL reference signals to the M terminals, wherein transmit power of a $1^{st}$ first SL reference signal among the N first SL reference signals is less than target power of the $1^{st}$ first SL reference signals, and the $1^{st}$ first SL reference signal is a signal among the N first SL reference signals.

18. The method according to claim 17, wherein the M1 terminals are determined based on at least one of the following:

RSRP of a second terminal, wherein the second terminal is any one of the M terminals;
a priority of the second terminal; and
a distance between the second terminal and the first terminal.

19. The method according to claim 17, wherein the N1 first SL reference signals are determined based on a priority of a third SL reference signal, and the third SL reference signal is any one of the N first SL reference signals.

20. The method according to claim 14, wherein a time domain occasion of each first SL reference signal comprises an automatic gain control AGC symbol and a gap symbol.

21. The method according to claim 15, wherein in a case that the N first SL reference signals are sent to the first terminal by the other terminals, received power of the N first SL reference signals received by the first terminal is within a preset threshold range.

22. The method according to claim 3, wherein the determining, by a first terminal, power information for target signal transmission on a first resource pool comprises:

   determining, by the first terminal, PH of the first SL reference signal sent in the first resource pool in a second time domain occasion; and
   sending, by the first terminal, the PH of the first SL reference signal to a target device, wherein the target device comprises at least one of a terminal and a network-side device.

23. A power determining apparatus, comprising:

   a determining module, configured to determine power information for target signal transmission on a first resource pool, wherein the target signal comprises a first sidelink SL reference signal or a physical sidelink control channel PSCCH, and the first SL reference signal is a reference signal for positioning, wherein
   the first resource pool comprises at least one of the following:

      a resource pool associated with the first SL reference signal; and
      a resource pool that cannot be used for transmission of data or a physical sidelink shared channel PSSCH.

24. The apparatus according to claim 23, wherein the resource pool associated with the first SL reference signal comprises at least one of the following:

   a resource pool that can be used for transmission of the first SL reference signal;
   a dedicated resource pool for the first SL reference signal as indicated by first indication information; and
   a resource pool in which the first SL reference signal has a highest priority.

25. A terminal, comprising a processor and a memory, wherein the memory stores a program or instructions capable of running on the processor, and when the program or instructions are executed by the processor, the steps of the power determining method according to any one of claims 1 to 22 are implemented.

26. A readable storage medium, wherein the readable storage medium stores a program or instructions, and when the program or instructions are executed by a processor, the steps of the method according to any one of claims 1 to 22 are implemented.

FIG. 1

A first terminal determines power information for target
signal transmission on a first resource pool, where the
target signal includes a first sidelink SL reference signal
or a physical sidelink control channel PSCCH

201

FIG. 2

| AGC | PRS | GP | AGC | PRS | GP |
|-----|-----|-----|-----|-----|-----|

FIG. 3

400

Power determining apparatus

Determining module ⎯ 401

FIG. 4

500

Communication device

Processor ⎯ 501

Memory ⎯ 502

FIG. 5

600

| | |
|---|---|
| 601 ~ Radio frequency unit | Network module ~ 602 |
| 610 | |
| 609 ~ Memory <br> Application program <br> Operating system | Audio output unit ~ 603 |
| 608 ~ Interface unit | 604 <br> Input unit <br> Graphics processing unit ~ 6041 <br> Microphone ~ 6042 |
| Processor | |
| 607 ~ User input unit <br> 6071 ~ Touch panel <br> 6072 ~ Other input devices | 606 <br> Display unit <br> Display panel ~ 6061 |
| Sensor ~ 605 | |

FIG. 6

## INTERNATIONAL SEARCH REPORT

| International application No. |
|---|
| **PCT/CN2023/091524** |

### A. CLASSIFICATION OF SUBJECT MATTER

H04W 28/02(2009.01)i; H04W 52/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXTC, DWPI, USTXT, VEN: 侧链路, 副链路, 终端, 用户, 设备, 资源, 资源池, 功率, 传输功率, 发送功率, 发射功率, 定位, 定位参考信号, 同步信号, 状态信息参考信号, 相位跟踪参考信号, 副链路控制信道, 侧链路控制信道 SL, sidelink, UE, terminal, resource pool, resource, RE, RB, power, transmit power, PRS, S-SSB, SL-CSI-RS, SL-DMRS, PTRS, PSCCH

### C. DOCUMENTS CONSIDERED TO BE RELEVANT

| Category* | Citation of document, with indication, where appropriate, of the relevant passages | Relevant to claim No. |
|---|---|---|
| PX | WO 2023046053 A1 (VIVO MOBILE COMMUNICATION CO., LTD.) 30 March 2023 (2023-03-30)<br>description, paragraphs [0030]-[0665] | 1-26 |
| X | CN 114339978 A (SPREADTRUM COMMUNICATIONS (SHANGHAI) CO., LTD.) 12 April 2022 (2022-04-12)<br>description, paragraphs [0005]-[0150] | 1-26 |
| X | CN 109151970 A (HUAWEI TECHNOLOGIES CO., LTD.) 04 January 2019 (2019-01-04)<br>description, paragraphs [0071]-[0231] | 1-26 |
| X | US 2021068062 A1 (QUALCOMM INCORPORATED) 04 March 2021 (2021-03-04)<br>description, paragraphs [0066]-[0132] | 1-26 |
| X | WO 2021086093 A1 (LG ELECTRONICS INC.) 06 May 2021 (2021-05-06)<br>description, paragraphs [0106]-[0190] | 1-26 |
| X | WO 2021141468 A1 (LG ELECTRONICS INC.) 15 July 2021 (2021-07-15)<br>description, paragraphs [0074]-[0413] | 1-26 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 June 2023** | **10 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/091524**

### C.     DOCUMENTS CONSIDERED TO BE RELEVANT

| Category* | Citation of document, with indication, where appropriate, of the relevant passages | Relevant to claim No. |
|---|---|---|
| A | WO 2021102815 A1 (HUAWEI TECHNOLOGIES CO., LTD.) 03 June 2021 (2021-06-03) entire document | 1-26 |
| A | WO 2022059887 A1 (LG ELECTRONICS INC.) 24 March 2022 (2022-03-24) entire document | 1-26 |
| A | NEC GROUP et al. "Physical channel mapping & power control for SCCH" *3GPP TSG-RAN WG1 Meeting #44bis R1-060829,* 21 March 2006 (2006-03-21), entire document | 1-26 |

Form PCT/ISA/210 (second sheet) (July 2022)

**INTERNATIONAL SEARCH REPORT**
**Information on patent family members**

International application No.

**PCT/CN2023/091524**

| Patent document cited in search report | | | Publication date (day/month/year) | Patent family member(s) | | | Publication date (day/month/year) |
|---|---|---|---|---|---|---|---|
| WO | 2023046053 | A1 | 30 March 2023 | None | | | |
| CN | 114339978 | A | 12 April 2022 | WO | 2022068610 | A1 | 07 April 2022 |
| CN | 109151970 | A | 04 January 2019 | EP | 3955655 | A1 | 16 February 2022 |
| | | | | US | 2020252878 | A1 | 06 August 2020 |
| | | | | US | 2019182777 | A1 | 13 June 2019 |
| | | | | BR | 112019026152 | A2 | 30 June 2020 |
| | | | | JP | 2020523904 | A | 06 August 2020 |
| | | | | US | 2021410073 | A1 | 30 December 2021 |
| | | | | EP | 3442278 | A1 | 13 February 2019 |
| | | | | CA | 3067081 | A1 | 20 December 2018 |
| | | | | ES | 2907757 | T3 | 26 April 2022 |
| | | | | CN | 108811066 | A | 13 November 2018 |
| | | | | WO | 2018228465 | A1 | 20 December 2018 |
| | | | | IN | 201917049802 | A | 03 January 2020 |
| | | | | VN | 69427 | A | 25 March 2020 |
| US | 2021068062 | A1 | 04 March 2021 | WO | 2021055144 | A1 | 25 March 2021 |
| | | | | TW | 202116095 | A | 16 April 2021 |
| | | | | EP | 4022986 | A1 | 06 July 2022 |
| | | | | CN | 114208306 | A | 18 March 2022 |
| | | | | IN | 202247003284 | A | 04 March 2022 |
| WO | 2021086093 | A1 | 06 May 2021 | US | 2022385423 | A1 | 01 December 2022 |
| | | | | EP | 4054102 | A1 | 07 September 2022 |
| WO | 2021141468 | A1 | 15 July 2021 | US | 2023101824 | A1 | 30 March 2023 |
| WO | 2021102815 | A1 | 03 June 2021 | CN | 114747293 | A | 12 July 2022 |
| WO | 2022059887 | A1 | 24 March 2022 | KR | 20230069939 | A | 19 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210471502